# EUROPEAN PATENT SPECIFICATION

(11) **EP 4 456 407 B1**
(45) Date of publication and mention of the grant of the patent: **25.03.2026**
(21) Application number: 23169514.9
(22) Date of filing: 24.04.2023
(51) Int. Cl.: H02P 6/10, H02P 29/50, H02P 6/06, H02P 23/04, H02M 1/00, H02M 3/158, H02M 7/5387

(54) **MOTOR DRIVE SYSTEM AND CORRESPONDING METHOD**
MOTORANTRIEBSSYSTEM UND ENTSPRECHENDES VERFAHREN
SYSTÈME D'ENTRAÎNEMENT DE MOTEUR ET PROCÉDÉ CORRESPONDANT

(43) Date of publication of application: 30.10.2024
(73) Proprietor: Infineon Technologies Austria AG, 9500 Villach (AT)
(72) Inventor: CHAKRABORTY, Debjani, 570016 Karnataka (IN); CHENDAKE, Vedant Sadashiv, 417397 Singapore (SG)
(74) Representative: Infineon Patent Department

(56) References cited:
- IT-A1- 201900 015 857
- US-A1- 2023 057 522
- US-B1- 6 300 738

## Description

### Technical field

The present document relates to motor drive systems for electric motors. In particular, the present document relates to a motor drive system for brushless direct current (BLDC) motors like e.g. permanent magnet synchronous motors (PMSMs).

### Background

In inverter-based motor drives, the phase current ripple is inversely proportional to the pulse width modulation (PWM) switching frequency. The phase current ripple contributes to motor losses, which reduce the efficiency of the motor and increase the temperature of the motor. For precision servo drives, which require high position accuracy, a torque ripple can have a negative impact on estimated position accuracy. The motor phase-current ripple must be reduced to reduce the torque ripple for a given motor, which can be achieved by increasing the inverter PWM switching frequency. However, higher switching frequency results in higher switching losses in MOSFET based inverter drives. To minimize switching losses at higher frequency, GaN based motor drives are used. The higher switching frequency provides a significantly reduced current ripple leading to lower RMS current, thus less heating of the winding and higher motor efficiency. However, GaN based motor drives increase overall cost and due to high switching frequency, GaN based motor drives require a substantial amount of design efforts. Also, higher voltage slew rates (dv/dt) are not good for the motor. Hence, additional filtering circuitry is needed before they are fed to the motor terminals. In a conventional motor drive system, an inverter is used to drive the motor. The power transfer from source to motor is controlled by controlling the duty cycle of the MOSFETs/IGBTs/switches via switching. In a brushless DC (BLDC) motor, usually 16-20kHz switching frequency is used to drive the switches in the inverter. In this conventional method, switching losses bring down the overall system efficiency. The motor terminals observe the switched voltage which contributes to higher DC bus current ripples, and acoustic noise in the motor.

To control power and speed, the duty cycle of the MOSFETs in the inverter is controlled. Thus, switching is required in the conventional method. But switching introduces the above-mentioned consequences and higher torque ripple. One way of reducing torque ripple is to increase the switching frequency, and that is why GaN is a popular choice.

GaN based motor drives show a plurality of limitations. Firstly, voltage source inverters (VSIs) are good for dynamic response but when operated at higher switching frequency with GaN it requires minimum 6 switches which can significantly increase the system cost. Secondly, higher switching frequency with GaN requires a fast motor control loop which requires a mid/high range microcontroller (MCU) with specific set of peripherals such as high resolution PWM and fast ADC, high bandwidth OPAMPs which increases the cost. Thirdly, higher switching frequency with GaN brings more challenges to the inverter design as it can bring lot of issues related to electromagnetic interference (EMI), ringing etc. Fourthly, GaN switches at high frequency generate higher dv/dt which then fed directly into the motor terminals can result in winding damage and can result in the noise issues. And finally, higher dv/dt can deteriorate the winding insulation hence it needs to be avoided. High frequency switching with GaN can generate higher dv/dt and can easily cross the permissible range hence additional LCR EMI output filters are needed which increase the cost of the solution.

IT 201900015857 A1 relates to a device and method for powering and controlling a Brushless DC motor. The power supply and control device for the Brushless DC electric motor is intended to be powered by a direct current (DDC) power source. The power supplying control device comprises an input for acquiring a signal representative of a target speed of the electric motor, a DC-DC voltage reducer (DC/DC Buck) configured to regulate a continuous output voltage as a function of the signal representative of the target speed, and a three-phase DC-AC converter (VSI) powered by said DC-DC voltage reducer (DC/DC Buck), directly feeding the electric motor, configured to operate at a constant frequency and independently from the target speed.

US 2023/0057522 A1 relates to a motor control device. The motor control device includes a step-down device including a DC-output power conversion device having a first mode for outputting first voltage and a second mode for outputting second voltage lower than the first voltage; a power supply device; and a control device, and controls a motor. When a flying object takes off, the control device controls the power conversion device in the first mode. When the control device judges that flight information which is one or both of information of a motor parameter obtained along with control for the motor and information of an environmental factor relevant to the flight altitude of satisfies a predetermined condition, or when the control device has received an mode signal for which the second mode is selected on the basis of the flight information during control for the motor, the control device controls the power conversion device in the second mode.

It is an object of the present to overcome the above-mentioned problems by providing a novel motor drive system. For example, it is an object to eliminate high dv/dt switched pulse voltage into the motor terminals. Thus, the motor terminals may not observe any switching harmonics, and the inverter switching losses may be eliminated, and system efficiency may be improved, thus higher output power may be delivered. It is also an object to reduce overall cost of the system and, at the same time, to achieve similar/better performance than GaN based conventional inverters.

### Summary

According to an aspect, the present invention is defined in the motor drive system according to independent claim 1. The motor drive system may be configured to drive an electric motor. The motor drive system may comprise a DC/DC power converter configured to generate a regulated output voltage at an output of the DC/DC power converter. The motor drive system may comprise an inverter circuit comprising inverter switches. The inverter circuit may be configured to generate motor drive signals for driving the electric motor based on the regulated output voltage of the DC/DC power converter.

In other words, the inverter circuit may be coupled to the output of the DC/DC power converter. By providing the regulated output voltage by the DC/DC power converter, it becomes possible to shift voltage control of the electric motor from the inverter circuit to the DC/DC power converter. At this, the control of the inverter circuit may be independent of the control of the DC/DC power converter.

In general, the DC/DC power converter may be based on any sort of isolated or non-isolated topology. For example, the DC/DC power converter may be based on a non-isolated topology such as e.g. a buck, a boost, a buck-boost, a Ćuk, a SEPIC, or a switched capacitor topology. Alternatively, the DC/DC power converter may be based on an isolated topology such as e.g. the flyback topology or any sort of resonant topology (such as e.g. LLC topologies).

The electric motor may be e.g. a brushless direct current (BLDC) motor. Specifically, the electric motor may be a permanent magnet synchronous motor (PMSM). Some functions of the motor drive system may be implemented in hardware, some functions may be implemented in software.

On the one hand, the DC/DC power converter may be configured to generate the regulated output voltage for controlling a desired speed or a desired torque of the electric motor. On the other hand, the inverter circuit may not be configured to control a desired speed or a desired torque of the electric motor. That is, the inverter circuit may not be configured to control/change the amount of power transferred to the electric motor by adapting the switching pattern of the inverter switches. For example, there may be no PWM switching of the inverter switches. In yet other words, it may be said that the power transfer via the inverter circuit is not changed by the inverter circuit itself, but by the upstream DC/DC power converter circuit.

The inverter circuit may be configured to control switching of the inverter switches based on rotor position information of the electric motor. In particular, the inverter circuit may be configured to control switching of the inverter switches only based on the rotor position information of the electric motor. The inverter circuit may be configured to control switching of the inverter switches not based on the desired speed or the desired torque of the electric motor. However, in case of angle advance/lag in the estimated/sensed rotor position information the inverter circuit may be configured to control switching of the inverter switches. The motor drive system may be configured to generate control signals for controlling the inverter circuit such that the electric motor is operated at maximum speed/torque with regard to the regulated output voltage of the DC/DC power converter.

The motor drive system may comprise a rotor position determination unit configured to determine a rotor position of the electric motor. For example, the rotor position of the electric motor may be determined with the help of hall sensors, wherein the hall sensors may or may not be part of the claimed rotor position determination unit. Or the rotor position determination unit may be configured to determine the rotor position of the electric motor in a sensorless manner based on back electromotive force (BEMF) information or another observer model. For example, the rotor position may be sector information, i.e., information identifying a current sector out of a total number of sectors in which the rotor may be located in. The inverter circuit may then be configured to apply a particular switching pattern to the inverter switches for each sector.

The DC/DC power converter may be configured to, in voltage mode control, regulate the regulated output voltage by comparing a sensed output voltage of the DC/DC power converter with a user-defined reference voltage. For this purpose, the motor drive system may be configured to sense the output voltage of the DC/DC power converter and determine a difference between the sensed output voltage and the used-defined reference voltage. Said difference may then be applied to a proportional integral (PI) controller. As a result, the voltage/power provided to the electric motor may be controlled by the DC/DC power converter. For example: the higher the user-defined reference voltage, the higher the rotation frequency (speed)/ torque of the electric motor may be.

According to the invention, the DC/DC power converter is configured to, in torque mode control, regulate the regulated output voltage by comparing the sensed output voltage of the DC/DC power converter with a torque reference voltage (which may be e.g. a PI controller output), wherein the DC/DC power converter is configured to determine said torque reference voltage based on a torque reference current value and a sensed motor current. The motor drive system is configured to sense the motor current at the output of the DC/DC power converter e.g. through return path shunt resistor or in-line current sensing. This motor current may then flow into the electric motor via the inverter circuit. For example, the DC/DC power converter may be configured to determine said torque reference voltage by determining a difference between the torque reference current value and the sensed motor current and by applying a PI controller to this difference.

The torque reference current value may be e.g. a user-defined torque reference current value. Alternatively, the motor drive system may be configured to determine the torque reference current value by comparing a rotor speed of the electric motor with a reference speed. The motor drive system may be configured to determine the rotor speed of the electric motor based on the rotor position information, which in turn may be determined by the rotor position determination unit.

In general, the DC/DC power converter may be a switched mode power supply (SMPS), and the switches of the SMPS may be implemented using GaN technology. The SMPS may only comprise GaN switches. More specifically, the DC/DC power converter may be a synchronous buck power converter. Thus, the output voltage of the buck power converter may be lower than the input voltage of the buck power converter, and the output current of the buck power converter may be higher than the input current of the buck power converter. The motor drive system may be configured to determine a switching state of the synchronous buck power converter based on a sensed output voltage of the synchronous buck power converter or a sensed motor current.

The DC/DC power converter may be configured to determine a pulse width modulation (PWM) signal (duty cycle) with various feedback loops using e.g. voltage mode or current mode control. Alternatively, pulse frequency modulation (PFM) techniques such as constant on-time (COT) control may be used to control operation of the synchronous buck power converter.

The synchronous buck power converter may comprise a high side switching element coupled between a first input of the synchronous buck power converter and a switching node. The synchronous buck power converter may comprise a low side switching element coupled between the switching node and a second input of the synchronous buck power converter. The synchronous buck power converter may comprise an inductor coupled between the switching node and an output of the synchronous buck power converter. Optionally, the synchronous buck power converter may comprise an output capacitor coupled between the output of the synchronous buck power converter and the second input of the synchronous buck power converter.

Both switching elements may be implemented with any suitable devices, such as, for example, metal-oxide-semiconductor field effect transistors MOSFETs, insulated-gate bipolar transistors IGBTs, MOS-gated thyristors, or any other suitable power devices. For instance, the switching elements may be implemented using a III-V compound semiconductor material such as e.g. GaN- high-electron-mobility transistors HEMTs. Each switching element may have a gate to which a respective driving voltage/current or control signal may be applied to turn the switching element on (i.e. to close the switching element) or to turn the switching element off (i.e. to open the switching element). Without loss of generality, it is preferable that the switching elements of the synchronous buck power converter may be implemented using GaN technology and that they may be switched at a relatively high frequency such as e.g. 1MHz.

The inverter circuit may comprise a first inverter switch coupled between a first input of the inverter circuit and a first output of the inverter circuit. The inverter circuit may comprise a second inverter switch coupled between the first output of the inverter circuit and a second input of the inverter circuit. The inverter circuit may comprise a third inverter switch coupled between the first input of the inverter circuit and a second output of the inverter circuit. The inverter circuit may comprise a fourth inverter switch coupled between the second output of the inverter circuit and the second input of the inverter circuit. The inverter circuit may comprise a fifth inverter switch coupled between the first input of the inverter circuit and a third output of the inverter circuit. The inverter circuit may comprise a sixth inverter switch coupled between the third output of the inverter circuit and the second input of the inverter circuit.

Again, the inverter switches may be implemented with any suitable devices, such as, for example, metal-oxide-semiconductor field effect transistors MOSFETs, insulated-gate bipolar transistors IGBTs, MOS-gated thyristors, or any other suitable power devices. For instance, the inverter switches may be implemented using a III-V compound semiconductor material such as e.g. GaN- high-electron-mobility transistors HEMTs. Each inverter switch may have a gate to which a respective driving voltage/current or control signal may be applied to turn the switching element on (i.e. to close the inverter switch) or to turn the switching element off (i.e. to open the inverter switch).

Without loss of generality, it is preferable that the inverter switches may be implemented using MOSFET technology and that the inverter switches may be switched at a relatively low frequency in the order of the rotation frequency of the rotor of the electric motor. For instance, the switching frequency of the inverter switches may be between 0 to 1kHz or 2kHz.

According to another aspect, the present invention is defined in the method of driving an electric motor according to independent claim 16.

The method may comprise steps corresponding to the functional features of the motor drive system described throughout this document. The method may comprise generating, by a DC/DC power converter, a regulated output voltage at an output of the DC/DC power converter. The method may comprise generating, by an inverter circuit comprising inverter switches, motor drive signals for driving the electric motor based on the regulated output voltage of the DC/DC power converter.

The method may comprise generating, by the DC/DC power converter, the regulated output voltage for controlling a desired speed or a desired torque of the electric motor. The method may comprise not controlling, by the inverter circuit, a desired speed or a desired torque of the electric motor. The method may comprise controlling, by the motor drive system, switching of the inverter switches based on rotor position information of the electric motor. The method may comprise determining, by a rotor position determination unit, the rotor position information of the electric motor.

The method may comprise regulating, by the DC/DC power converter, in voltage mode control, the regulated output voltage by comparing a sensed output voltage of the DC/DC power converter with a user-defined reference voltage.

According to the invention, the method comprises regulating, by the DC/DC power converter, in torque mode control, the regulated output voltage by comparing the sensed output voltage of the DC/DC power converter with a torque reference voltage (which may be e.g. a PI controller output). The method comprises determining, by the DC/DC power converter, said torque reference voltage based on a torque reference current value and a sensed motor current sensed at the output of the DC/ DC power converter.

The method may comprise determining the torque reference current value by comparing a rotor speed of the electric motor with a reference speed.

The DC/DC power converter may be a switched mode power supply (SMPS) and the switches of the SMPS may be implemented using GaN technology. For example, the DC/DC power converter may be a synchronous buck power converter. The method may comprise determining a switching state of the synchronous buck power converter based on a sensed output voltage of the synchronous buck power converter or a sensed motor current.

Again, the synchronous buck power converter may comprise a high side switching element coupled between a first input of the synchronous buck power converter and a switching node. The synchronous buck power converter may comprise a low side switching element coupled between the switching node and a second input of the synchronous buck power converter. The synchronous buck power converter may comprise an inductor coupled between the switching node and an output of the synchronous buck power converter.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

In the present document, the term "couple" or "coupled" refers to elements being in electrical communication with each other, whether directly connected e.g., via wires, or indirectly connected via other circuit elements between them. For example, two elements may be said to be coupled even if there is a circuit element such as a switch (which may be turned on and off) in between them. On the other hand, the term "connect" or "connected" refers to elements being directly electrically connected with each other, e.g. via wires, and no circuit elements are located between them.

### Short description of the figures

The present invention is illustrated by way of example, and not by way of limitation, in the figures in which like reference numerals refer to similar or identical elements, and in which
Fig. 1 shows a conventional BLDC motor drive,
Fig. 2 shows a current source inverter topology,
Fig. 3 shows an exemplary circuit diagram of a motor drive system according to the teachings of the present invention,
Fig. 4 shows the implementation of proportional integral (PI) control using an comparator; and
Fig. 5 shows a BEMF sensing circuit and the phase current during one commutation.

### Detailed Description

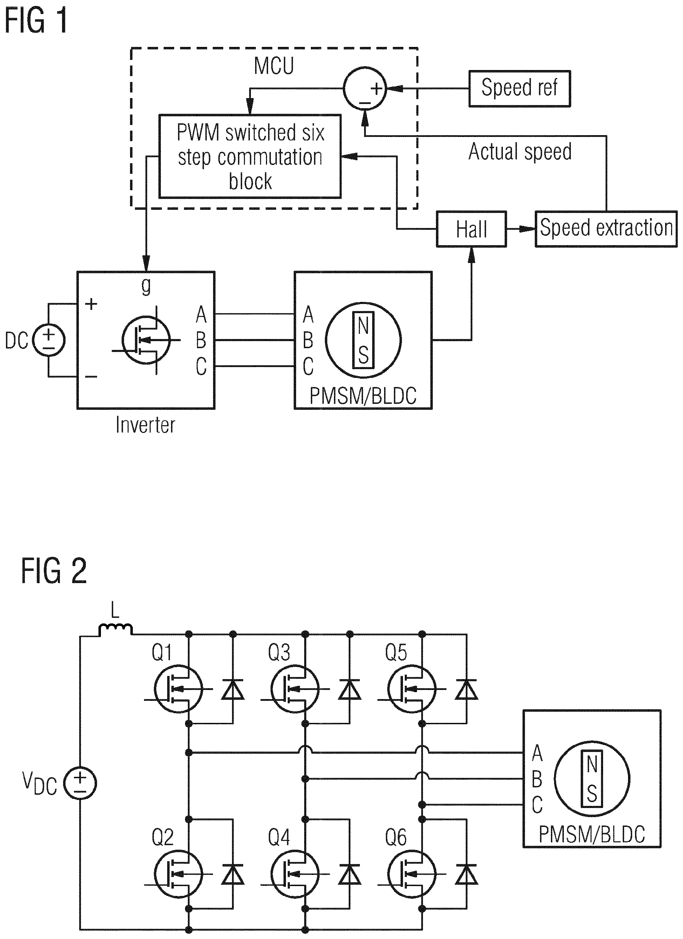

Fig. 1 shows a conventional BLDC motor drive. Specifically, Fig. 1 shows a block diagram of a conventional motor drive system (Voltage Source Inverter, VSI) for a 6-step commutated BLDC motor. In a conventional BLDC motor drive, the battery/dc link voltage bus may be connected to an inverter which drives the BLDC/PMSM motor. The gates of the switches in the inverter are driven using a logic combination from the speed/torque/voltage control system, along with the rotor angle information giving the sector information. Fig. 1 shows the block diagram of Hall based trapezoidal control.

Current Source Inverters (CSI) are attractive for fast switching applications due to the filtering of high dv/dt on the phase outputs. Typically, maximum dv/dt on motors allowed is 5v/ns whereas mid voltage MV GaN can easily reach 50v/ns. High dv/dt due to short rise times may lead to voltage spikes and ringing on the leading edge of the voltage pulse. This ringing is a source of high-frequency EMI, and the voltage spikes may damage the motor windings if the peak voltage is too high. The hardware topology for the CSI is shown in Fig. 2. Since the source for the inverter is a current, the devices must be able to block current in both directions which can be achieved either by using bi-directional switches, back-to-back configured switches or a switch + diode combination.

There are several disadvantages associated with CSI-topologies: Typically, in order to drive CSI topology, 6x synchronous independent duty-cycle (not complimentary) high resolution-PWM outputs with/without overlap insertion are required. Even though CSI is more reliable than VSI and offers inherent short circuit protection, the costs are higher due to large inductance and capacitor requirements. Moreover, the dynamic response of CSI may be slower than the dynamic response of VSI. A high switching frequency is used to minimize inductance and capacitance, but it also requires additional filters at the motor terminals to avoid higher dv/dt going into motor. Efficient higher switching frequency is possible with GaN technology, but then due to 6 GaN switches (minimum), overall cost of the inverter significantly increases which may limits its application in many motor drive applications. And finally, the higher switching frequency also requires higher CPU bandwidth to run the control loop efficiently with high-speed ADC, high bandwidth OPAMPs and high resolution PWM. Hence, mid/high end MCU's are needed which increases the cost of the solution.

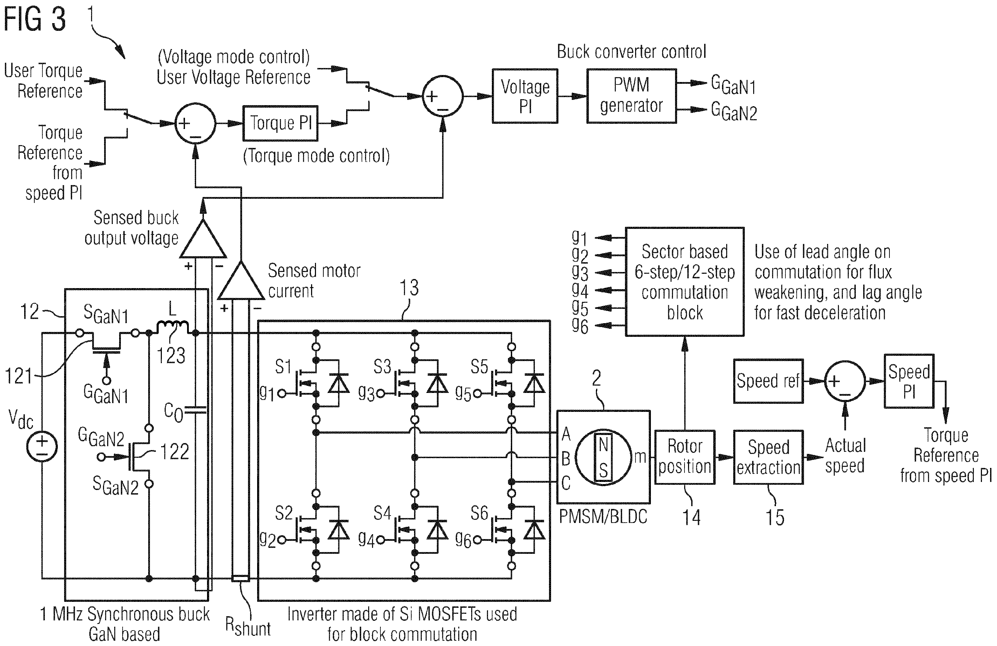

Fig. 3 shows an exemplary circuit diagram of a motor drive system 1 according to the teachings of the present invention. Fig. 3 also displays the electric motor 2 itself which is, however, not supposed to be part of the presented motor drive system 1. The exemplary motor drive system 1 comprises a DC/DC power converter 12 configured to generate a regulated output voltage/current at an output of the DC/DC power converter. The motor drive system 1 also comprises an inverter circuit 13 comprising six inverter switches, wherein the inverter circuit 13 is configured to generate motor drive signals for driving the electric motor based on the regulated output voltage/current of the DC/DC power converter 12.

In the illustrated example, the DC/DC power converter 12 is implemented as a synchronous buck power converter with a high side switching element 121 coupled between a first input of the synchronous buck power converter and a switching node. The synchronous buck power converter also comprises a low side switching element 122 coupled between the switching node and a second input of the synchronous buck power converter. The synchronous buck power converter further comprises an inductor 123 coupled between the switching node and an output of the synchronous buck power converter.

Fig. 3 also shows the rotor position determination unit 14 which may be required for the control of the inverter circuit 13. In addition, a speed extraction unit 15 is illustrated. Fig. 3 also shows various feedback loops for controlling the switching of the buck converter based on the measured output voltage and/or output current. The functions of the feedback loops may be implemented in software on an MCU.

The proposed example solution of Fig. 3 eliminates high frequency switching at the motor terminals A, B, C, but instead controls the voltage to the inverter circuit 13 smoothly which results in less ripple in DC bus current and thus the system level efficiency increases. To be more specific, the proposed solution eliminates high frequency switching at the motor terminals by using a synchronous buck converter 12 between the voltage source and the inverter circuit 13. Since the voltage to the inverter is controlled smoothly by the buck converter, the inverter switches don't require a duty control and hence high frequency switching can be eliminated. Inverter switches are turned ON for a complete sector and which switches to be turned on can be determined by sector information. The hall signals information can be used to determine the sector information. Alternatively, in sensorless control it can be determined based on the BEMF information. Here we are controlling the voltage to the inverter directly instead of the duty to the inverter switches, that's how we are avoiding the PWM switching at the motor terminals. However, the voltage is controlled by the buck converter. The concept of controlling duty to control voltage to regulate speed/torque is replaced here by, changing voltage output of the buck converter to regulate to the required speed/torque.

The system level efficiency calculation from simulation shows an increase in efficiency by approximately 10% compared to the GaN based VSI. The synchronous buck converter composes of two GaN devices switched at 1MHz operating in voltage control. The motor can be driven by the voltage mode control with user setting voltage reference for the respective speed, or in torque mode control, where the torque reference can be either set by user based on return shunt current information or using the speed control loop. The output voltage node of this synchronous buck converter is connected across the inverter as a regulated voltage source. Since the buck converter is driven at a very high switching frequency using GaN devices, the required buck inductor is very small, thus this makes this solution design very compact and can be placed directly on the motor.

Also, with the use of GaN devices at 1MHz or more the size of required bus capacitance also reduces significantly.

Since the inverter switches need higher conduction time and don't require any high frequency switching, the inverter can be composed of low on-state resistance ( Rds_on ) of MOSFET based on the voltage.

Depending on the implementation, the proposed system may provide the following technical advantages: (1) There is no high switching frequency required at the inverter, hence the MOSFET/IGBT based inverters can be used to achieve similar/better performance than the conventional high switching frequency-controlled CSI/VSI. (2) GaN is used only for the buck converter to regulate the voltage to the inverter. Inverter switches are used only to switch between different sectors which happens at very low frequency. Maximum inverter switching frequency will be equal to the maximum fundamental frequency of motor and typically ranges between 1KHz- 2KHz even for high-speed motors. (3)Very low dv/dt at motor terminals hence ringing, EMI or torque ripple issues can be easily eliminated. (4) Estimated 20% reduction in torque ripple compared to conventional VSI BLDC drives. (5) Doesn't require additional filter circuits to limit high dv/dt hence overall cost is reduced. (6) No need of mid/high end MCU as control loop frequency can be kept lower. MCU doesn't need any specialized peripheral set such as high resolution PWM or fast ADC and high bandwidth OPAMPs to drive the inverter hence solution cost gets optimized. (7) Clean BEMF waveform zero-crossing information can be used to estimate rotor angle, also reconstruct phase currents, making the proposed solution sensorless. (8) Fast dynamic response compared to CSI as voltage is controlled directly. (9) Significant increase in efficiency compared to fast switching CSI or VSI since very low torque ripple can be achieved even with only commutation of inverter based upon the sector information. (10) Fast switching inverter designs are complicated due to ringing and EMI noise issues. Since proposed inverter is operated at just commutation at fundamental frequency design efforts can be significantly reduced and helps customer to minimize time to market.

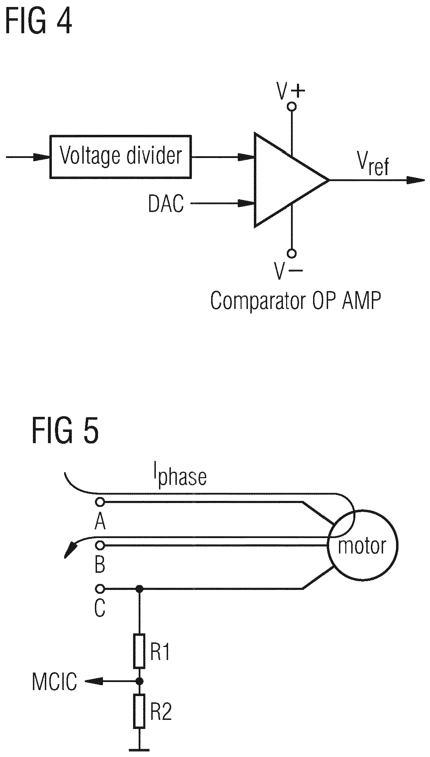

The proposed concept can be implemented with a synchronous GaN based buck converter plus MCU to control the converter and the motor, and an inverter circuit with inverter switches to support higher conduction as shown in Fig. 3. However, it is also possible and much easier to implement the buck converter's proportional integral (PI) voltage control by just using comparator OPAMPs, to reduce computation load on MCU, and thus also reduce the cost of MCU. Comparator output can be used directly to switch buck converter by means of hysteresis control. Fig. 4 shows the implementation of PI using a comparator OP AMP.

The proposed concept is demonstrated on BLDC motor with conventional 6 step commutation. It's the most widely used and simple control with the hall sensors and ideally can run with very low CPU utilization hence even suitable for low end MCU's. However, the drawback of this control method is it has very high torque ripple and less efficiency compared to field oriented control (FOC), which limits its application usage. The torque ripple can be reduced further by applying 12 step commutation.

Proposed method minimizes the torque ripple, increase efficiency by adding the buck converter in addition to the VSI inverter. Hence there will not be significant increase in the cost but at the same time we can reduce the torque ripple significantly and overall efficiency is increased.

Also, implementation of sensorless rotor position sensing is easier using the proposed solution because during commutation as in Fig. 5, one open phase will be used for sensing back EMF (BEMF). Fig. 5 shows a BEMF sensing circuit and the phase current during one commutation. Using the proposed solution, it is very easy and computationally simple to detect zero-crossing since there is no switching in the BEMF waveform. The same sensed BEMF can be used to reconstruct stator current thus potentially eliminating shunt resistor required for current sensing for current protection algorithm application.

The fundamental idea behind the proposed method is to eliminate fast switching and hence high dv/dt fed directly into the motor terminals. The proposed solution gets rid of the switching source at the motor terminals. Using, for example, a GaN based synchronous buck converter, we have transferred the responsibility of voltage control and switching, at the buck regulated source, placed between the voltage source and the inverter. This way the inverter observes the same, a source of voltage, however it's a regulated voltage source contrary to the conventional fixed voltage source system. The inverter operates sector to sector change and sector information can be obtained from either the hall signals or BEMF information. Implementation of sensorless control is easier using the proposed solution because now zero-crossing detection is significantly simpler with clean BEMF waveform.

Overall, the theory of operation for a BLDC 6 step commutation remains the same, just that we are using a regulated voltage source at the input of the inverter thus the voltage control is handed by this regulator, and we eliminate any switching noise at the motor terminals. The motor terminals observe a clean voltage at its terminals and observes only the fundamental frequency which is same as the electric speed of the motor.

It should be noted that the description and drawings merely illustrate the principles of the proposed methods and systems. Those skilled in the art will be able to implement various arrangements that, although not explicitly described or shown herein, are included within the scope of the protection, as defined by the appended claims. Furthermore, all examples and embodiment outlined in the present document are principally intended expressly to be only for explanatory purposes to help the reader in understanding the principles of the proposed methods and systems.

## Claims

1. A motor drive system (1) configured to drive an electric motor (2), the motor drive system (1) comprising
- a DC/DC power converter (12) configured to generate a regulated output voltage (Vdc) at an output of the DC/DC power converter (12), and
- an inverter circuit (13) comprising inverter switches (S1, .., S6), wherein the inverter circuit (13) is configured to generate motor drive signals for driving the electric motor (2) based on the regulated output voltage of the DC/DC power converter (12),
wherein the DC/DC power converter (12) is configured to, in torque mode control, regulate the regulated output voltage by comparing a sensed output voltage of the DC/DC power converter (12) with a torque reference voltage, wherein the DC/DC power converter (12) is configured to determine said torque reference voltage based on a torque reference current value and a motor current sensed at the output of the DC/DC power converter (12).

2. The motor drive system (1) according to claim 1, wherein the DC/DC power converter (12) is configured to generate the regulated output voltage for controlling a desired speed or a desired torque of the electric motor (2).

3. The motor drive system (1) according to any one of the preceding claims, wherein the inverter circuit (13) is not configured to control a desired speed or a desired torque of the electric motor (2).

4. The motor drive system (1) according to any of the preceding claims, further configured to control switching of the inverter switches (S1, ..., S6) based on a rotor position of the electric motor (2), wherein the rotor position is a sector information and wherein a switching frequency of the inverter switches (S1, ..., S6) is adapted to range between 0 to 1 kHz, or 0 to 2 kHz, or 1 to 2 kHz.

5. The motor drive system (1) according to claim 4, wherein the sector information identifies a current sector out of a total number of possible sectors, and wherein the inverter circuit (13) is configured to apply a particular switching pattern to the inverter switches (S1, ..., S6) for each sector.

6. The motor drive system (1) according to claims 4 or 5, wherein the inverter circuit (13) is configured to turn ON the inverter switches (S1, ..., S6) for a complete sector based on the sector information.

7. The motor drive system (1) according to claims 4 to 6, comprising a rotor position determination unit (14) configured to determine the rotor position information of the electric motor (2).

8. The motor drive system (1) according to any one of the preceding claims, wherein the DC/DC power converter (12) is configured to, in voltage mode control, regulate the regulated output voltage by comparing a sensed output voltage of the DC/DC power converter with a user-defined reference voltage.

9. The motor drive system (1) according to claim 8, wherein the motor drive system (1) is configured to determine the torque reference current value by either comparing a rotor speed of the electric motor (2) with a reference speed or by using a user-defined torque reference current value.

10. The motor drive system (1) according to any one of the preceding claims, wherein the DC/DC power converter (12) is a switched mode power supply SMPS, and wherein switches of the SMPS are implemented using GaN technology.

11. The motor drive system (1) according to any one of the preceding claims, wherein the DC/DC power converter (12) is a synchronous buck power converter.

12. The motor drive system (1) according to claim 10, wherein the motor drive system (1) is configured to determine a switching state of the synchronous buck power converter (12) based on a sensed output voltage of the synchronous buck power converter or a sensed motor current.

13. The motor drive system (1) according to claim 11 or 12, wherein the synchronous buck power converter (12) comprises
- a high side switching element (121) coupled between a first input of the synchronous buck power converter (12) and a switching node,
- a low side switching element (122) coupled between the switching node and a second input of the synchronous buck power converter (12), and
- an inductor (123) coupled between the switching node and an output of the synchronous buck power converter (12).

14. The motor drive system (1) according to any of claims 12 to 13, comprising feedback loops for controlling the switching of the buck converter (12) based on the sensed output voltage and/or output current.

15. The motor drive system (1) according to any one of the preceding claims, wherein the inverter circuit (13) comprises
- a first inverter switch (S1) coupled between a first input of the inverter circuit and a first output of the inverter circuit,
- a second inverter switch (S2) coupled between the first output of the inverter circuit and a second input of the inverter circuit,
- a third inverter switch (S3) coupled between the first input of the inverter circuit and a second output of the inverter circuit,
- a fourth inverter switch (S4) coupled between the second output of the inverter circuit and the second input of the inverter circuit,
- a fifth inverter switch (S5) coupled between the first input of the inverter circuit and a third output of the inverter circuit, and
- a sixth inverter switch (S6) coupled between the third output of the inverter circuit and the second input of the inverter circuit.

16. A method of driving an electric motor, the method comprising
- generating, by a DC/DC power converter, a regulated output voltage at an output of the DC/DC power converter,
- generating, by an inverter circuit comprising inverter switches, motor drive signals for driving the electric motor based on the regulated output voltage of the DC/DC power converter, and
- regulating, in torque mode control, the regulated output voltage by comparing a sensed output voltage of the DC/DC power converter (12) with a torque reference voltage, and
- determining, by the DC/DC power converter, said torque reference voltage based on a torque reference current value and a motor current sensed at the output of the DC/DC power converter (12).

17. The method according to claim 16, comprising
- generating, by the DC/DC power converter, the regulated output voltage for controlling a desired speed or a desired torque of the electric motor.

## Patentansprüche

1. Motorantriebssystem (1), das dazu ausgelegt ist, einen Elektromotor (2) anzutreiben, wobei das Motorantriebssystem (1) Folgendes umfasst
- einen DC/DC-Leistungswandler (12), der dazu ausgelegt ist, eine geregelte Ausgangsspannung (Vdc) an einem Ausgang des DC/DC-Leistungswandlers (12) zu erzeugen, und
- eine Wechselrichterschaltung (13), die Wechselrichterschalter (S1, ..., S6) umfasst, wobei die Wechselrichterschaltung (13) dazu ausgelegt ist, Motorantriebssignale zum Antreiben des Elektromotors (2) basierend auf der geregelten Ausgangsspannung des DC/DC-Leistungswandlers (12) zu erzeugen,
wobei der DC/DC-Leistungswandler (12) dazu ausgelegt ist, bei einer Drehmomentmodussteuerung die geregelte Ausgangsspannung durch Vergleichen einer erfassten Ausgangsspannung des DC/DC-Leistungswandlers (12) mit einer Drehmomentreferenzspannung zu regeln, wobei der DC/DC-Leistungswandler (12) dazu ausgelegt ist, die Drehmomentreferenzspannung basierend auf einem Drehmomentreferenzstromwert und einem Motorstrom, der an dem Ausgang des DC/DC-Leistungswandlers (12) erfasst wird, zu bestimmen.

2. Motorantriebssystem (1) nach Anspruch 1, wobei der DC/DC-Leistungswandler (12) dazu ausgelegt ist, die geregelte Ausgangsspannung zum Steuern einer gewünschten Drehzahl oder eines gewünschten Drehmoments des Elektromotors (2) zu erzeugen.

3. Motorantriebssystem (1) nach einem der vorhergehenden Ansprüche, wobei die Wechselrichterschaltung (13) nicht dazu ausgelegt ist, eine gewünschte Drehzahl oder ein gewünschtes Drehmoment des Elektromotors (2) zu steuern.

4. Motorantriebssystem (1) nach einem der vorhergehenden Ansprüche, das ferner dazu ausgelegt ist, das Schalten der Wechselrichterschalter (S1, ..., S6) basierend auf einer Rotorposition des Elektromotors (2) zu steuern, wobei die Rotorposition eine Sektorinformation ist und wobei eine Schaltfrequenz der Wechselrichterschalter (S1, ..., S6) dazu ausgelegt ist, zwischen 0 bis 1 kHz oder 0 bis 2 kHz oder 1 bis 2 kHz zu liegen.

5. Motorantriebssystem (1) nach Anspruch 4, wobei die Sektorinformation einen aktuellen Sektor aus einer Gesamtzahl möglicher Sektoren identifiziert und wobei die Wechselrichterschaltung (13) dazu ausgelegt ist, ein bestimmtes Schaltmuster für jeden Sektor auf die Wechselrichterschalter (S1, ..., S6) anzuwenden.

6. Motorantriebssystem (1) nach Anspruch 4 oder 5, wobei die Wechselrichterschaltung (13) dazu ausgelegt ist, die Wechselrichterschalter (S1, ..., S6) für einen vollständigen Sektor basierend auf der Sektorinformation einzuschalten.

7. Motorantriebssystem (1) nach den Ansprüchen 4 bis 6, umfassend eine Rotorpositionsbestimmungseinheit (14), die dazu ausgelegt ist, die Rotorpositionsinformationen des Elektromotors (2) zu bestimmen.

8. Motorantriebssystem (1) nach einem der vorhergehenden Ansprüche, wobei der DC/DC-Leistungswandler (12) dazu ausgelegt ist, bei einer Spannungsmodussteuerung die geregelte Ausgangsspannung durch Vergleichen einer erfassten Ausgangsspannung des DC/DC-Leistungswandlers mit einer benutzerdefinierten Referenzspannung zu regeln.

9. Motorantriebssystem (1) nach Anspruch 8, wobei das Motorantriebssystem (1) dazu ausgelegt ist, den Drehmomentreferenzstromwert entweder durch Vergleichen einer Rotordrehzahl des Elektromotors (2) mit einer Referenzdrehzahl oder durch Verwenden eines benutzerdefinierten Drehmomentreferenzstromwerts zu bestimmen.

10. Motorantriebssystem (1) nach einem der vorhergehenden Ansprüche, wobei der DC/DC-Leistungswandler (12) ein Schaltnetzteil-SMPS ist und wobei Schalter des SMPS unter Verwendung von GaN-Technologie implementiert sind.

11. Motorantriebssystem (1) nach einem der vorhergehenden Ansprüche, wobei der DC/DC-Leistungswandler (12) ein synchroner Abwärtsleistungswandler ist.

12. Motorantriebssystem (1) nach Anspruch 10, wobei das Motorantriebssystem (1) dazu ausgelegt ist, einen Schaltzustand des synchronen Abwärtsleistungswandlers (12) basierend auf einer erfassten Ausgangsspannung des synchronen Abwärtsleistungswandlers oder einem erfassten Motorstrom zu bestimmen.

13. Motorantriebssystem (1) nach Anspruch 11 oder 12, wobei der synchrone Abwärtsleistungswandler (12) Folgendes umfasst:
- ein High-Side-Schaltelement (121), das zwischen einen ersten Eingang des synchronen Abwärtsleistungswandlers (12) und einen Schaltknoten gekoppelt ist,
- ein Low-Side-Schaltelement (122), das zwischen den Schaltknoten und einen zweiten Eingang des synchronen Abwärtsleistungswandlers (12) gekoppelt ist, und
- eine Induktivität (123), die zwischen den Schaltknoten und einen Ausgang des synchronen Abwärtsleistungswandlers (12) gekoppelt ist.

14. Motorantriebssystem (1) nach einem der Ansprüche 12 bis 13, das Rückkopplungsschleifen zum Steuern des Schaltens des Abwärtswandlers (12) basierend auf der erfassten Ausgangsspannung und/oder dem erfassten Ausgangsstrom umfasst.

15. Motorantriebssystem (1) nach einem der vorhergehenden Ansprüche, wobei die Wechselrichterschaltung (13) Folgendes umfasst
- einen ersten Wechselrichterschalter (S1), der zwischen einen ersten Eingang der Wechselrichterschaltung und einen ersten Ausgang der Wechselrichterschaltung gekoppelt ist,
- einen zweiten Wechselrichterschalter (S2), der zwischen den ersten Ausgang der Wechselrichterschaltung und einen zweiten Eingang der Wechselrichterschaltung gekoppelt ist,
- einen dritten Wechselrichterschalter (S3), der zwischen den ersten Eingang der Wechselrichterschaltung und einen zweiten Ausgang der Wechselrichterschaltung gekoppelt ist,
- einen vierten Wechselrichterschalter (S4), der zwischen den zweiten Ausgang der Wechselrichterschaltung und den zweiten Eingang der Wechselrichterschaltung gekoppelt ist,
- einen fünften Wechselrichterschalter (S5), der zwischen den ersten Eingang der Wechselrichterschaltung und einen dritten Ausgang der Wechselrichterschaltung gekoppelt ist, und
- einen sechsten Wechselrichterschalter (S6), der zwischen den dritten Ausgang der Wechselrichterschaltung und den zweiten Eingang der Wechselrichterschaltung gekoppelt ist.

16. Verfahren zum Antreiben eines Elektromotors, wobei das Verfahren Folgendes umfasst
- Erzeugen, durch einen DC/DC-Leistungswandler, einer geregelten Ausgangsspannung an einem Ausgang des DC/DC-Leistungswandlers,
- Erzeugen, durch eine Wechselrichterschaltung, die Wechselrichterschalter umfasst, von Motorantriebssignalen zum Antreiben des Elektromotors basierend auf der geregelten Ausgangsspannung des DC/DC-Leistungswandlers, und
- Regeln, in der Drehmomentmodussteuerung, der geregelten Ausgangsspannung durch Vergleichen einer erfassten Ausgangsspannung des DC/DC-Leistungswandlers (12) mit einer Drehmomentreferenzspannung, und
- Bestimmen, durch den DC/DC-Leistungswandler, der Drehmomentreferenzspannung basierend auf einem Drehmomentreferenzstromwert und einem Motorstrom, der am Ausgang des DC/DC-Leistungswandlers erfasst wird (12).

17. Verfahren nach Anspruch 16, das Folgendes umfasst:
- Erzeugen, durch den DC/DC-Leistungswandler, der geregelten Ausgangsspannung zur Steuerung einer gewünschten Drehzahl oder eines gewünschten Drehmoments des Elektromotors.

## Revendications

1. Un système (1) d'entraînement de moteur configuré pour entraîner un moteur (2) électrique, le système (1) d'entraînement de moteur comprenant
- un convertisseur (12) de puissance courant continu/courant continu configuré pour créer une tension (Vdc) de sortie régulée à une sortie du convertisseur (12) de puissance courant continu/courant continu, et
- un circuit (13) onduleur comprenant des interrupteurs (S1, ..., S6) d'onduleur, dans lequel le circuit (13) onduleur est configuré pour créer des signaux d'entraînement de moteur pour entraîner le moteur (2) électrique sur la base de la tension de sortie régulée du convertisseur (12) de puissance courant continu/courant continu,
dans lequel le convertisseur (12) de puissance courant continu/courant continu est configuré pour réguler, en commande en mode de couple, la tension de sortie régulée en comparant une tension de sortie détectée du convertisseur (12) de puissance courant continu/courant continu à une tension de référence de couple, dans lequel le convertisseur (12) de puissance courant continu/courant continu est configuré pour déterminer ladite tension de référence de couple sur la base d'une valeur en cours de référence de couple et d'un courant du moteur détecté à la sortie du convertisseur (12) de puissance courant continu/courant continu.

2. Le système (1) d'entraînement de moteur suivant la revendication 1, dans lequel le convertisseur (12) de puissance courant continu/courant continu est configuré pour créer la tension de sortie régulée pour commander une vitesse souhaitée ou un couple souhaité du moteur (2) électrique.

3. Le système (1) d'entraînement de moteur suivant l'une quelconque des revendications précédentes, dans lequel le circuit (13) onduleur n'est pas configuré pour commander une vitesse souhaitée ou un couple souhaité du moteur (2) électrique.

4. Le système (1) d'entraînement de moteur suivant l'une quelconque des revendications précédentes, configuré en outre, pour commander une commutation des interrupteurs (S1, ..., S6) de l'onduleur sur la base d'une position du rotor du moteur (2) électrique, dans lequel la position du rotor est une information sectorielle, et dans lequel une fréquence de commutation des interrupteurs (S1, ..., S6) de l'onduleur est adaptée à une plage allant de 0 à 1 kHz, ou de 0 à 2 kHz, ou de 1 à 2 kHz.

5. Le système (1) d'entraînement de moteur suivant la revendication 4, dans lequel l'information sectorielle identifie un secteur en cours parmi un nombre total de secteurs possibles, et dans lequel le circuit (13) onduleur est configuré pour appliquer une configuration particulière de commutation aux interrupteurs (S1, ..., S6) de l'onduleur pour chaque secteur.

6. Le système (1) d'entraînement de moteur suivant la revendication 4 ou 5, dans lequel le circuit (13) onduleur est configuré pour fermer les interrupteurs (S1, ..., S6) de l'onduleur pour un secteur complet sur la base de l'information sectorielle.

7. Le système (1) d'entraînement de moteur suivant la revendication 4 à 6, comprenant une unité (14) de détermination de la position du rotor configurée pour déterminer l'information de position du rotor du moteur (2) électrique.

8. Le système (1) d'entraînement de moteur suivant l'une quelconque des revendications précédentes, dans lequel le convertisseur (12) de puissance courant continu/courant continu est configuré pour réguler, en commande en mode de tension, la tension de sortie régulée en comparant une tension de sortie détectée du convertisseur de puissance courant continu/courant continu à une tension de référence définie par un utilisateur.

9. Le système (1) d'entraînement de moteur suivant la revendication 8, dans lequel le système (1) de commande de moteur est configuré pour déterminer la valeur du courant de référence de couple en comparant une vitesse du rotor du moteur (2) électrique à une vitesse de référence ou en utilisant une valeur en cours de référence de couple définie par un utilisateur.

10. Le système (1) d'entraînement de moteur suivant l'une quelconque des revendications précédentes, dans lequel le convertisseur (12) de puissance courant continu/courant continu est une alimentation de puissance en mode commuté SMPS, et dans lequel des commutateurs de la SMPS sont mis en œuvre en utilisant une technologie GaN.

11. Le système (1) d'entraînement de moteur suivant l'une quelconque des revendications précédentes, dans lequel le convertisseur (12) de puissance courant continu/courant continu est un convertisseur de puissance buck synchrone.

12. Le système (1) d'entraînement de moteur suivant la revendication 10, dans lequel le système (1) d'entraînement de moteur est configuré pour déterminer un état de commutation du convertisseur (12) de puissance buck synchrone sur la base d'une tension de sortie détectée et du convertisseur de puissance buck synchrone ou d'un courant détecté de moteur.

13. Le système (1) d'entraînement de moteur suivant la revendication 11 ou 12, dans lequel le convertisseur (12) de puissance buck synchrone comprend
- un élément (121) de commutation de côté haut monté entre une première entrée du convertisseur (12) de puissance buck synchrone et un nœud de commutation,
- un élément (122) de commutation de côté bas monté entre le nœud de commutation et une deuxième entrée du convertisseur (12) de puissance buck synchrone, et
- un inductance (123) montée entre le nœud de commutation et une sortie du convertisseur (12) de puissance buck synchrone.

14. Le système (1) d'entraînement de moteur suivant l'une quelconque des revendications 12 à 13, comprenant des boucles de réaction pour commander la commutation du convertisseur (12) buck de la tension de sortie et/ou du courant de sortie détecté.

15. Le système (1) d'entraînement de moteur suivant l'une quelconque des revendications précédentes, dans lequel le circuit (13) onduleur comprend
- un premier interrupteur (S1) d'onduleur monté entre une première entrée du circuit onduleur et une première sortie du circuit onduleur,
- un deuxième interrupteur (S2) d'onduleur monté entre la première sortie du circuit onduleur et une deuxième entrée du circuit onduleur,
- un troisième interrupteur (S3) d'onduleur monté entre la première entrée du circuit onduleur et une deuxième sortie du circuit onduleur,
- un quatrième interrupteur (S4) d'onduleur monté entre la deuxième sortie du circuit onduleur et la deuxième entrée du circuit onduleur,
- un cinquième interrupteur (S5) d'onduleur monté entre la première entrée du circuit onduleur et une troisième sortie du circuit onduleur, et
- un sixième interrupteur (S6) d'onduleur monté entre la troisième sortie du circuit onduleur et la deuxième entrée du circuit onduleur.

16. Un procédé d'entraînement d'un moteur électrique, le procédé comprenant
- créer, par un convertisseur de puissance courant continu/courant continu, une tension de sortie régulée à une sortie du convertisseur de puissance courant continu/courant continu,
- créer, par un circuit onduleur comprenant des interrupteurs onduleurs, des signaux d'entraînement de moteur pour entraîner le moteur électrique sur la base de la tension de sortie régulée du convertisseur de puissance courant continu/courant continu, et
- réguler, en commande en mode de couple, la tension de sortie régulée, en comparant une tension de sortie détectée du convertisseur (12) de puissance courant continu/courant continu à une tension de référence de couple, et
- déterminer, par le convertisseur de puissance courant continu/courant continu, ladite tension de référence de couple sur la base d'une valeur en cours de référence de couple et d'un courant du moteur détecté à la sortie du convertisseur (12) de puissance courant continu/courant continu.

17. Le procédé suivant la revendication 16, comprenant
- créer, par le convertisseur de puissance courant continu/courant continu, la tension de sortie régulée pour commander une vitesse souhaitée ou un couple souhaité du moteur électrique.
